# EUROPÄISCHE PATENTANMELDUNG

(11) **EP 2 541 126 A2**
(43) Veröffentlichungstag der Anmeldung: **02.01.2013**
(21) Anmeldenummer: 12173588.0
(22) Anmeldetag: 26.06.2012
(51) Int. Cl.: F21S 8/02, F21V 17/06, F21V 21/04, F21V 17/16

(54) **Selbstschneidender Einbauring zum Einbau einer Leuchte und Werkzeug zur Montage des Einbaurings**

(30) Priorität: 01.07.2011 DE 102011051513
(71) Anmelder: Richter Lighting Technologies GmbH, 73540 Heubach (DE)
(72) Erfinder: Richter, Bernd, 73540 Heubach (DE); Berding, Jens, 10247 Berlin (DE)
(74) Vertreter: Engel, Christoph Klaus

(57) **Zusammenfassung**

Die Erfindung betrifft einen Einbauring (01) zum Einbau einer Einbauleuchte (02) in eine Platte (03), welcher zur Herstellung einer kreisrunden Öffnung in der Platte (03) dient und nach dem Herstellen der Öffnung in dieser verbleibt. Der Einbauring (01) ist durch einen hohlzylindrischen Grundkörper gebildet, welcher einen Trennrand (04) an seiner ersten Zylinderöffnung, ein radial auswärts ragendes Anschlagmittel (06) an seiner zweiten Zylinderöffnung, ein Halteelement (07) zum Festhalten des Einbaurings in der Öffnung und ein Verbindungsmittel (08) zum Verbinden mit der Einbauleuchte (02) oder mit einem Werkzeug (09) umfasst. Die Erfindung betrifft außerdem ein Werkzeug (09) zur Montage des Einbauringes.

## Beschreibung

Die Erfindung betrifft einen Einbauring zum Einbau einer Einbauleuchte in eine Platte, z.B. in eine Deckenplatte einer abgehängten Decke oder einer Deckenverkleidung, eine Wandplatte oder dergleichen. Weiterhin betrifft die Erfindung ein Werkzeug zur Montage des Einbaurings in der Platte.

Einbauleuchten werden seit vielen Jahren besonders im Innenbereich, speziell in Wohn- und Geschäftsräumen eingesetzt.

Die DE 10 2009 050 159 A1 zeigt eine Montagevorrichtung für eine Einbauleuchte. Bei der Montage werden das in die Öffnung der Decke eingesetzte Leuchtengehäuse oder der Einbaurahmen automatisch dort fixiert. Dazu werden Rastelemente verwendet, welche durch eine seitliche Verformung von einer Montagestellung in eine Raststellung überführbar sind. Die Betätigung der Rastelemente erfolgt über Betätigungsmittel, die durch die Berührung mit der Deckenplatte betätigt werden. Die Öffnung in der Decke muss in einem eigenständigen Arbeitsschritt mit herkömmlichen Werkzeugen hergestellt werden.

Aus der DE 20 2010 001 902 U1 ist eine Halterung für Einbauleuchten bekannt mit einem oberen Halteteil, das an der Tragdecke befestigt wird, und einem unteren Halteteil, das höhenverstellbar an dem oberen Halteteil zu befestigen ist. Das obere Halteteil ist ein zylindrisches Rohrstück und weist einen Befestigungsflansch und ein Gewinde auf. Es wird mittels Schrauben an der Decke angebracht. Das untere Halteteil hat die Form eines oben offenen Hohlzylinders mit einem Gewinde, das zum Gewinde des oberen Halteteils passt. Der Boden des unteren Halteteils bildet die Montagefläche. Die Öffnung in der Tragdecke muss wiederum in einem eigenständigen Arbeitsschritt mit herkömmlichen Werkzeugen hergestellt werden.

Die EP 2 202 451 A1 zeigt eine Montagevorrichtung für Einbauleuchten, die eine Montageplatte und einen Montagering umfasst. Die Montageplatte wird durch eine Öffnung in der Deckenplatte hindurchgeführt, auf der Rückseite der Platte angebracht und dort mittels Verschrauben befestigt. Die Montageplatte besitzt eine kreisförmige Ausnehmung, an deren Umfang drei Abschnitte eines Innengewindes als Stege ausgebildet sind. Der Montagering weist auf mehreren Abschnitten der Außenseite ein Außengewinde, passend zum Innengewinde der Montageplatte auf. Die Montage ist relativ aufwendig. Die Öffnung in der Deckenplatte wird auch hierbei in einem eigenständigen Arbeitsschritt mit herkömmlichen Werkzeugen hergestellt.

Bei den genannten Montagevorrichtungen muss in einem separaten Arbeitsschritt eine dem Einbaurahmen entsprechende Öffnung in die Platte mit einem separaten Werkzeug eingebracht werden. Für runde Einbauleuchten kann dafür eine Lochsäge, Bohrkrone oder ein Hohlbohrer verwendet werden, der zusammen mit einer entsprechenden Aufnahme in eine Bohrmaschine eingespannt wird.

Aus der NL 920 10 38 A ist ein Befestigungsring zum Einbau von Beleuchtungsarmaturen beschrieben, welcher einen Schneidrand aufweist. Der Ring wird von der Rückseite der Platte aus verwendet, um das Montageloch herzustellen. Eine Befestigung des Ringes in der Platte ist nicht vorgesehen. Durch auf der Oberseite der Platte aufliegende Griffe ist der Ring vor dem Herausfallen aus der Platte gesichert. In einem nachfolgenden Arbeitsgang wird der Einbaurahmen in herkömmlicher Weise in der Öffnung der Platte durch verschiedene Befestigungsmittel befestigt.

Die Aufgabe der Erfindung besteht darin, eine einfache und preiswerte Möglichkeit zur Montage einer Einbauleuchte in Zwischendecken oder Wandverkleidungsplatten zu schaffen, der eine wesentliche Erleichterung der Montage im Vergleich zum Stand der Technik ermöglicht.

Die Aufgabe wird durch einen Einbauring mit den Merkmalen des Anspruchs 1 gemeinsam mit einem Werkzeug mit den Merkmalen des Anspruchs 8 gelöst.

Ein erfindungsgemäßer Einbauring zum Einbau einer Einbauleuchte, z. B. eines Downlights, in eine Platte dient erfindungsgemäß gleichzeitig der Herstellung einer kreisrunden Öffnung in der Platte und der Halterung der Leuchte in eingebautem Zustand, indem er unmittelbar nach dem Herstellen der Öffnung in dieser fixiert wird und dort verbleibt. Der erfindungsgemäße Einbauring ist somit gleichzeitig Hilfswerkzeug für die Erzeugung der Montageöffnung als auch Montageelement für die Halterung der einzubauenden Leuchte.

Die Vorteile der Erfindung sind insbesondere darin zu sehen, dass es quasi in einem einzigen Arbeitsgang gelingt, sowohl die Öffnung in der Platte herzustellen, als auch den nötigen Einbaurahmen zu befestigen. Dies erspart bei der Montage vor allem Zeit. Als besonders vorteilhaft hat sich herausgestellt, dass durch die Erfindung eine exakt zum Einbaurahmen passende Öffnung in der Platte hergestellt wird und auf das Mitführen und die Auswahl verschiedener Lochbohrer und Werkzeuge verzichtet werden kann. Außerdem wird die Platte an den Rändern der Öffnung nicht beschädigt, sodass ein nachträgliches Verspachteln und Anstreichen der Ränder entfällt. Dabei erfolgt die Herstellung der Montageöffnung aus derselben Einbaurichtung, aus der auch die Leuchte in die Öffnung eingesetzt wird.

Der erfindungsgemäße Einbauring besitzt einen hohlzylindrischen Grundkörper, der an einer ersten Zylinderöffnung einen Trennrand zum Durchtrennen der Platte trägt. Der Trennrand ist in einer besonders bevorzugten Ausführungsform als Sägezahnrand gestaltet, so dass der Einbauring in Verbindung mit einem abgestimmten Werkzeug und einer Bohrmaschine oder einem Akkuschrauber die Funktion einer Lochsäge übernimmt. In Abhängigkeit vom Material der zu öffnenden Platte kann der Trennrand aber auch als Schneidklinge oder dergleichen ausgebildet sein.

An seiner zweiten Zylinderöffnung trägt der Einbauring ein radial nach außen gerichtetes Anschlagmittel, das dazu dient, den Einbauvorgang nach Durchtrennen der Platte und Befestigen in der Öffnung zu beenden, indem ein Anschlag auf der zugänglichen Seite der Platte erfolgt, und ein zu weites Ein- bzw. Durchschieben des Einbaurings durch die Öffnung verhindert wird. Das Anschlagmittel ist in einer vorteilhaften Ausführungsform als umlaufender Anschlagrand ausgebildet. Dieser vermittelt neben der Anschlagfunktion auch einen guten optischen Eindruck. Das Anschlagmittel könnte aber ebenso durch umgebördelte Nasen oder dergleichen gebildet sein, die später nach der Montage von einem Anschlag- oder Zierring der Einbauleuchte verdeckt sind.

Der Einbauring umfasst weiterhin ein Halteelement zum Festhalten des Einbauringes in der Platte. Das Halteelement ist in einer besonders bevorzugten Ausführungsform als umlaufendes selbstschneidendes Außengewinde bzw. einen oder mehrere Abschnitte eines solchen Außengewindes ausgeführt. Bei dieser Ausführungsform erfolgt bereits beim Bohren des Loches eine Befestigung des Einbauringes in der Platte. Vorzugsweise sind umlaufend unterbrochene, radial nach außen gerichtete Gewindelaschen mit einer geringen Steigung ggf. axial versetzt angeordnet. Die Gewindedimensionierung kann der Fachmann bei Kenntnis des Materials der Platte, in die der Einbauring eingeschraubt werden soll, leicht vornehmen.

Das Halteelement kann auf alle bekannten Arten, die selbsthaltend ausgeführt sind, gestaltet werden. Beispielsweise könnten auch Federelemente vorgesehen sein, die in radialer Richtung nach außen ragen, beim Bohren zurückfedern und sich nach Durchtrennen der Platte hinter diese entspannen und damit den Einbauring mit der Platte verklemmen. Auch weitere abgewandelte Gestaltungen, wie beispielsweise Klemmringe oder andere aus dem Stand der Technik bekannte Befestigungsvarianten sind in Kombination mit der Erfindung denkbar.

Der Einbauring umfasst weiterhin ein Verbindungsmittel zum Aufnehmen der Einbauleuchte im Einbauring oder zum Aufnehmen des Einbauringes an einem von einer Handbohrmaschine oder dergleichen betreibbaren Werkzeug. Dieses Verbindungsmittel kann auf jede bekannte Art ausgeführt sein. Ein Bajonettverschluss hat sich dabei als besonders vorteilhaft herausgestellt. Dabei ist als Bajonettnut im Einbauring ein Längsschlitz vorgesehen, an dessen Ende sich rechtwinklig ein kurzer Querschlitz fortsetzt.

Vorteilhafterweise wird der Einbauring aus einem gestanzten Blech hergestellt, die Funktionselemente Haltemittel und Verbindungsmittel sind durch bekannte Blechbearbeitungsverfahren, wie Stanzen, Biegen, Prägen und Walzen hergestellt. Das Blech wird zum Ring geformt und vorzugsweise geschweißt. Da der Einbauring zum einmaligen Einbohren in die Platte vorgesehen ist, werden keine besonderen Anforderungen an die Härte des Materials gestellt.

Soll der Einbauring in einem typischen Anwendungsfall in eine sogenannte Gipskartonplatte eingesetzt werden, kann er auch aus Kunststoff hergestellt sein. Wenn der Trennrand entsprechend scharfkantig ausgebildet ist, genügt dieses Material ohne weiteres, um die Papierlage einer solche Platte zu durchtrennen und den Ring dann in das relativ weiche Gipsmaterial einzuschneiden.

Zum Zweck des Herstellens einer kreisrunden Öffnung in der Platte wird der Einbauring mit einem Werkzeug gekoppelt, das in die Bohrmaschine bzw. den Akkuschrauber einspannbar ist.

Das Werkzeug zur Montage des Einbauringes umfasst einen kreisförmigen Grundkörper, vorzugsweise eine Grundplatte, in der vorzugsweise zentriert und verdrehfest ein Zentrierbohrer und in entgegen gesetzter Richtung ein Koppelglied zur Ankopplung an den Antrieb einer Bohrmaschine befestigt sind. Grundsätzlich lässt sich das Werkzeug auch ohne Zentrierbohrer gestalten, jedoch bereitet die genaue Positionierung dann größere Probleme. Von der Grundplatte ausgehend erstreckt sich in axialer Richtung ein vorzugsweise zylindrischer oder hohlzylindrischer Randbereich, an dem ein Werkzeugverbindungsmittel vorgesehen ist, das komplementär zum Verbindungsmittel des Einbauringes passt. Die Verbindungsmittel von Einbauring, Werkzeug und Einbauleuchte sind vorzugsweise als Bajonettverschluss ausgeführt. In diesem Fall trägt der Einbauring Bajonettnuten und das Werkzeug, sowie die Einbauleuchte Bajonettfedern, die entsprechend komplementär ausgebildet und passend zueinander an den jeweiligen Elementen angeordnet sind.

Der Grundkörper kann in abgewandelten Ausführungsformen beispielsweise auch durch einen Speichenring gebildet sein, dessen Nabe mit der Bohrspitze und dem Koppelglied verbunden ist. Abwandlungen des Grundkörpers sind von der Erfindung mit einbegriffen.

Nach dem Einbohren des Einbauringes, bei dem gleichzeitig automatisch dessen Befestigung in der hergestellten Öffnung erfolgt, kann das Werkzeug aus dem Einbauring entfernt werden und die Einbauleuchte in diesen eingesetzt werden.

Eine besonders bevorzugte Ausführungsform der Erfindung wird nachfolgend anhand der Figuren näher erläutert.

Es zeigen:
- Fig. 1:: eine räumliche, teils geschnittene Darstellung einer eingebauten Einbauleuchte mit einem erfindungsgemäßen Einbauring;
- Fig. 2:: den erfindungsgemäßen Einbauring in räumlicher Ansicht;
- Fig. 3:: ein Werkzeug zur Aufnahme des Einbaurings und Verwendung an einer Handbohrmaschine in einer räumlichen Ansicht;
- Fig. 4:: typische Montageschritte bei der Montage der Einbauleuchte;
- Fig. 5:: eine Schnittdarstellung des am Werkzeug montierten Einbaurings sowie eine Detaildarstellung.

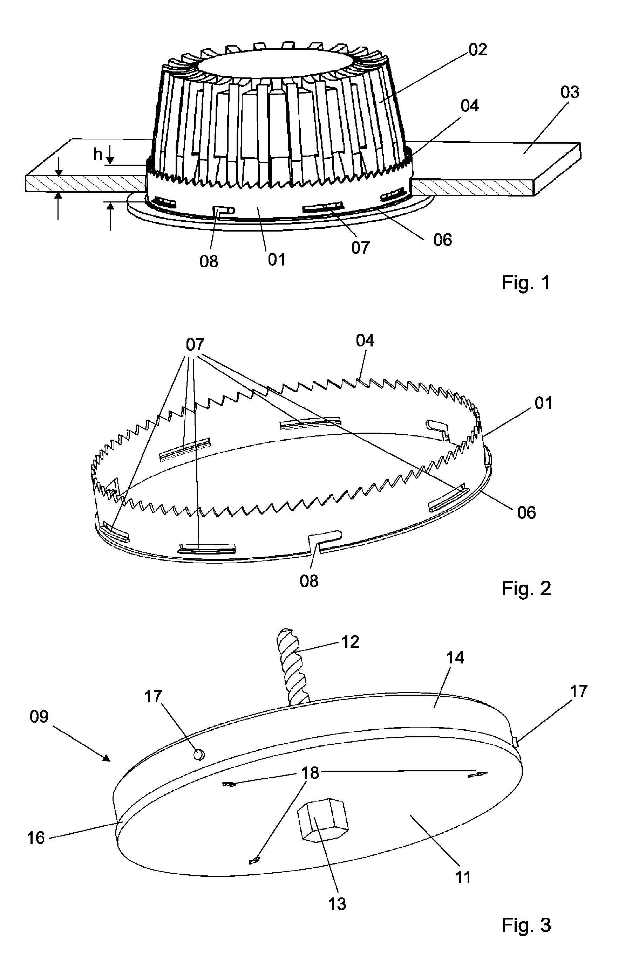

Fig. 1 zeigt einen erfindungsgemäßen Einbauring 01 zum Einbau einer Einbauleuchte 02 in eine Platte 03, welche in den meisten Fällen eine Gipskartonplatte ist. Der Einbauring 01 dient erfindungsgemäß zunächst dem Herstellen einer kreisrunden Öffnung in der Platte 03 und verbleibt sodann als Halterung für die Einbauleuchte 02 in der Öffnung.

Der Einbauring 01 (siehe auch Fig. 2) hat eine im Wesentlichen hohlzylindrische Form. Er trägt an seiner ersten Zylinderöffnung einen Sägezahnrand 04 als Trennrand. An der entgegengesetzten zweiten Zylinderöffnung ist ein Anschlagrand 06 als Anschlagmittel vorgesehen. Der Anschlagrand 06 dient als Anschlag an der Einbauseite der Platte 03 beim Einbohren des Einbauringes 01 in die Platte 03 und als Anschlag für die Einbauleuchte bei deren Einsetzen in den Einbauring. Es ist ersichtlich, dass die Höhe h des Einbauringes 01 zumindest geringfügig größer sein muss als die Dicke d der Platte 03, damit die Platte 03 beim Herstellen der Öffnung vollständig durchtrennt wird. Denkbar sind aber auch Ausführungsformen, bei denen der Einbauring gegenüber der Plattendicke ein geringes Untermaß aufweist, wenn es das Plattenmaterial gestattet, den verbleibenden Materialbereich zu durchbrechen, ohne dabei die Platte im Randbereich der Öffnung zu stark zu beschädigen.

An der Außenseite des Einbauringes 01 sind selbstschneidende Halteabschnitte 07 als Halteelemente vorgesehen, welche sich beim Einbohren des Einbauringes 01 in die Innenwandung der Öffnung der Platte 03 einschneiden und dort für einen festen Halt des Einbaurings 01 in der Platte 03 sorgen. Sechs Halteabschnitte 07 sind in dieser Ausführungsform paarweise um den Umfang des Einbauringes verteilt. Sie zeigen eine geringe Steigung von etwa 0,4 bis 0,5 mm pro Halteabschnitt 07 und erstrecken sich über einen Umfangswinkel von etwa 30°. Die Dimensionierung und Verteilung der Halteabschnitte 07 kann entsprechend den Eigenschaften der Platte 03 und der Einbauleuchte 02 individuell angepasst werden.

Der Einbauring 03 besitzt weiterhin über den Umfang verteilt vorzugsweise drei Bajonettnuten 08 als Verbindungsmittel zum Verbinden mit der Leuchte 02 oder mit einem Werkzeug 09, wie es in Fig. 3 dargestellt ist.

Das Werkzeug 09 umfasst in der dargestellten Ausführungsform eine kreisförmige Grundplatte 11, in der zentriert ein Zentrierbohrer 12 und gegenüberliegend eine Werkzeugaufnahme 13 zum Einspannen des Werkzeuges in eine Handbohrmaschine oder einen Akkuschrauber angeordnet sind. Von der Grundplatte 11 aus erstreckt sich ein zylindrischer Randbereich 14 in Richtung der Bohrspitze 12. Der Randbereich 14 hat einen an den Innendurchmesser des Einbauringes 01 angepassten Außendurchmesser, so dass der Einbauring 01 über den Randbereich 14 geschoben werden kann, dort aber kein größeres Spiel aufweist. Die Grundplatte 11 bildet mit ihrem äußeren Rand einen axialen Anschlag 16 für den Einbauring 01. Auf dem Randbereich 14 sind drei Bajonettnasen 17 über den Umfang verteilt passend zu den Bajonettnuten 08 des Einbauringes 01 angeordnet. Auf der Bedienseite der Grundplatte 11 sind mit Kennzeichnungen 18 die Positionen der Bajonettfedern 17 gekennzeichnet. Dies erleichtert die Montage des Werkzeuges 09 mit dem Einbauring 01.

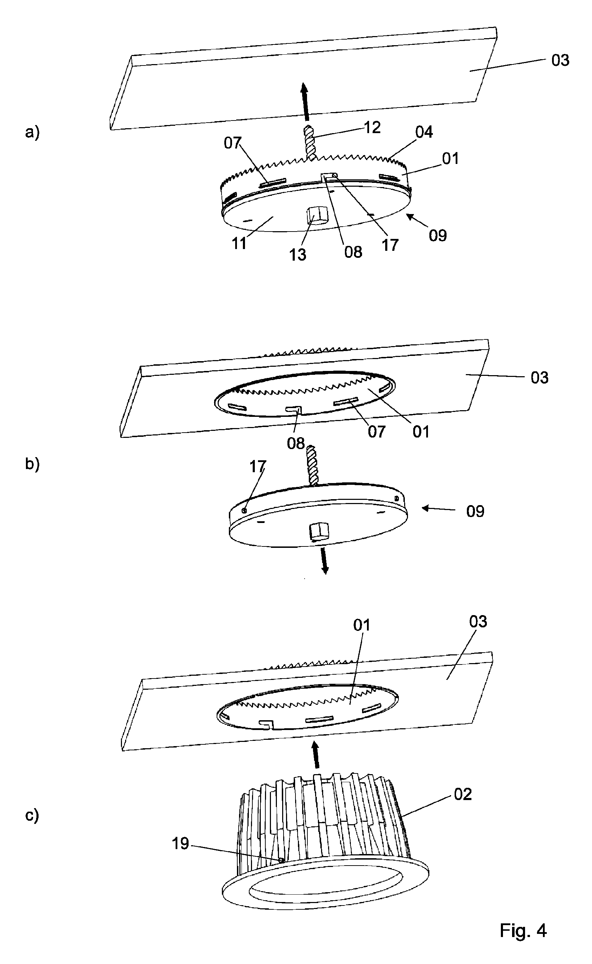

In Fig. 4 ist der Montageablauf des erfindungsgemäßen Einbauringes 01 und der Einbauleuchte 02 dargestellt. Abbildung a) zeigt, wie das Werkzeug 09 mit dem aufgesetzten Einbauring 01 in Richtung der Platte 03 bewegt wird, um mit dem drehenden Zentrierbohrer 12 zunächst eine Zentrierbohrung in die Platte 03 einzubringen, bevor der Sägezahnrand 04 die gewünschte Öffnung in die Platte 03 sägt. Selbstverständlich muss dazu das Werkzeug mittels Adapter 13 mit der entsprechenden Handbohrmaschine bzw. Akkuschrauber verbunden sein (nicht dargestellt).

Abbildung b) zeigt, wie das Werkzeug 09 aus dem in der Öffnung befestigten Einbauring 01 entnommen wird. Die Halteabschnitte 07 sind in die Wandung der Öffnung der Platte 03 eingeschnitten und verankern den Einbauring dort.

In Abbildung c) ist gezeigt, wie die Einbauleuchte 02 in den Einbauring 01 eingesetzt wird. Dazu werden an der Einbauleuchte 02 vorgesehene Bajonettnasen 19 in die Bajonettnuten 08 des Einbauringes 01 eingeführt und durch leichtes Drehen fixiert.

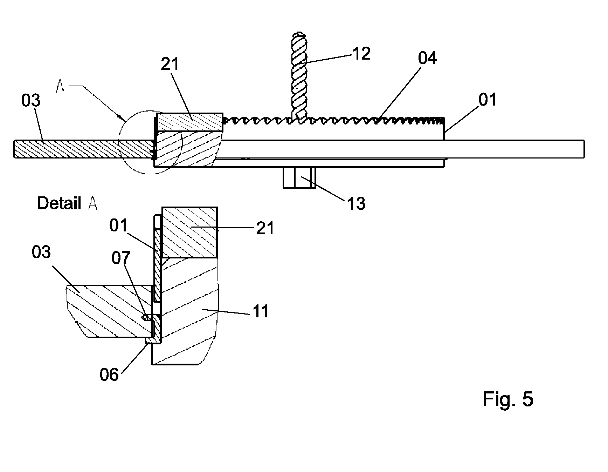

In Fig. 5 ist eine teilweise geschnittene Darstellung des Einbauringes 01 mit Werkzeug 09 gezeigt. In dieser Darstellung ist der Vorgang des Einbohrens gerade beendet, das Werkzeug 09 ist noch mit dem Einbauring 01 verbunden, welcher bereits in der Platte 03 fixiert ist. Zu erkennen ist, dass der Sägerand 04 die Platte 03 vollständig durchtrennt hat. Das herausgetrennte Stück 21 der Platte 03 befindet sich noch auf dem Werkzeug 09 und wird mit Abtrennung des Werkzeuges 09 vom Einbauring 01 mit entfernt. Die Halteabschnitte 07 sind in die Wandung der Öffnung eingeschnitten (siehe Detail A), der Anschlagrand 06 liegt an der Unterseite der Platte 03 an.

### Bezugszeichenliste

- 01 -: Einbauring
- 02 -: Einbauleuchte
- 03 -: Platte
- 04 -: Sägezahnrand
- 05 -: -
- 06 -: Anschlagrand
- 07 -: Haltelasche
- 08 -: Bajonettnut
- 09 -: Werkzeug
- 10 -: -
- 11 -: Grundplatte
- 12 -: Zentrierbohrer
- 13 -: Werkzeugaufnahme
- 14 -: Randbereich
- 15 -: -
- 16 -: Anschlag
- 17 -: Bajonettnase
- 18 -: Markierung
- 19 -: Bajonettnase
- 20 -: -
- 21 -: herausgetrenntes Stück der Platte 03

## Patentansprüche

1. Einbauring (01), der sowohl als Einbauhilfsmittel zur Befestigung einer Einbauleuchte (02) in eine Platte (03) als auch zur Herstellung einer kreisrunden Öffnung in der Platte (03) dient und nach dem Herstellen der Öffnung in dieser verbleibt, wobei der Einbauring (01) einen hohlzylindrischen Grundkörper aufweist, welcher umfasst:
- einen Trennrand (04), der an einer ersten Zylinderöffnung des Grundkörpers vorgesehen ist;
- ein radial auswärts ragendes Anschlagmittel (06), das an einer zweiten Zylinderöffnung des Grundkörpers vorgesehen ist;
- ein Halteelement (07) zum Festhalten des Einbaurings (01) in der Öffnung; und
- mindestens ein Verbindungsmittel (08) zum wahlweisen Verbinden mit der Einbauleuchte (02) und/oder mit einem Werkzeug (09).

2. Einbauring (01) nach Anspruch 1, **dadurch gekennzeichnet, dass** der Trennrand die Form eines Sägeblattes (04) aufweist.

3. Einbauring nach Anspruch 1 oder 2, **dadurch gekennzeichnet, dass** das Halteelement durch selbstschneidende Halteabschnitte (07) gebildet ist, welche über den Umfang verteilt auf einer äußeren Mantelfläche des Einbaurings (01) angeordnet sind.

4. Einbauring (01) nach einem der Ansprüche 1 bis 3, **dadurch gekennzeichnet, dass** die Halteabschnitte (07) durch sich in Umfangsrichtung erstreckende, radial nach außen abgewinkelte Ausstanzungen gebildet sind, die eine axiale Steigung aufweisen, um ein Außengewinde zu bilden.

5. Einbauring (01) nach einem der Ansprüche 1 bis 4, **dadurch gekennzeichnet, dass** das Anschlagmittel ein radial nach außen gerichteter Anschlagrand (06) ist.

6. Einbauring nach einem der Ansprüche 1 bis 5, **dadurch gekennzeichnet, dass** das Verbindungsmittel durch eine Bajonettnut (08) gebildet ist.

7. Einbauring nach einem der Ansprüche 1 bis 6, **dadurch gekennzeichnet, dass** er aus Stahlblech oder Kunststoff besteht.

8. Werkzeug (09) zur Montage eines Einbauringes (01) nach einem der Ansprüche 1 bis 7 in einer Platte, mit einer kreisförmigen Grundplatte (11), in der zentral ein Zentrierbohrer (12) und ein Adapter (13) zur Aufnahme des Werkzeuges (09) in einer Handbohrmaschine angeordnet ist und die einen sich axial in Richtung des Zentrierbohrers (12) erstreckenden zylindrischen Randbereich (14) mit einem Verbindungsmittel (17) zur Verbindung mit dem Einbauring (01) aufweist, wobei zwischen der Außenkante der Grundplatte (11) und dem Randbereich (14) ein Anschlag (16) gebildet ist.

9. Werkzeug nach Anspruch 8, **dadurch gekennzeichnet, dass** der, Adapter als Sechskant-Werkzeugaufnahme (13) ausgeführt ist.

10. Werkzeug nach Anspruch 8 oder 9, **dadurch gekennzeichnet, dass** auf der Grundplatte (11) Kennzeichnungen (18) für die Positionen der Verbindungsmittel (17) angeordnet sind.
